# EUROPÄISCHE PATENTSCHRIFT

(11) **EP 2 054 550 B1**
(45) Veröffentlichungstag und Bekanntmachung des Hinweises auf die Patenterteilung: **02.12.2009**
(21) Anmeldenummer: 07788254.6
(22) Anmeldetag: 06.08.2007
(51) Int. Cl.: D21H 21/20

(54) **VERFAHREN ZUR BEHANDLUNG VON CELLULOSEHALTIGEN FASERN ODER FLÄCHENGEBILDE ENTHALTEND CELLULOSEHALTIGE FASERN**
METHOD FOR TREATING CELLULOSE-CONTAINING FIBERS OR PLANAR STRUCTURES CONTAINING CELLULOSE-CONTAINING FIBERS
PROCÉDÉ DE TRAITEMENT DE FIBRES CONTENANT DE LA CELLULOSE OU D'ARTICLES PLATS COMPRENANT DES FIBRES QUI CONTIENNENT DE LA CELLULOSE

(30) Priorität: 25.08.2006 DE 102006039941
(43) Veröffentlichungstag der Anmeldung: 06.05.2009
(73) Patentinhaber: Wacker Chemie AG, 81737 München (DE)
(72) Erfinder: HERZIG, Christian, 83329 Waging Am See (DE); BURGER, Willibald, 84489 Burghausen (DE); RAPPL, Monika, 84489 Burghausen (DE)
(74) Vertreter: Deffner-Lehner, Maria
(86) Internationale Anmeldenummer: PCT/EP2007/058141
(87) Internationale Veröffentlichungsnummer: WO 2008/022905

(56) Entgegenhaltungen:
- WO-A-99/06471
- US-A1- 2003 131 962
- US-A1- 2004 118 533
- US-A1- 2004 118 540

## Beschreibung

Gegenstand der Erfindung ist ein Verfahren zur Behandlung von cellulosehaltigen Fasern oder Flächengebilde enthaltend cellulosehaltige Fasern.

US 2004/0118540 A1 beschreibt einen Prozess zur Papierherstellung, in dem zunächst eine hochmolekulare Aminkomponente mit einer NH₂-Konzentration von mindestens 1,5 mεqu./g in das wässrige Cellulosefasergemisch gegeben wird. Getrennt davon wird danach eine zweite Komponente zugegeben, die mit Aminogruppen reagieren kann, und die entweder eine polyanionische Verbindung ist oder ein aldehydfunktionelles Polymer.

Ein Papierprodukt mit erhöhter Festigkeit wird in US 6,824,650 B2 beansprucht. Das Produkt enthält eine Kombination aus einem Polyvinylamin und einem Komplexierungsmittel ausgewählt aus einem aldehydfunktionellen Polymer und einem Polyelektrolyten. Durch Reaktion von Polyvinylamin mit dem Komplexierungsmittel wird das Papierprodukt verstärkt.

Gegenstände, die Cellulose enthalten, von der mindestens ein Teil chemisch modifiziert wurde, und wobei eine weitere Chemikalie chemische Bindungen eingegangen ist, werden in US 6,916,402 B2 beansprucht. Die chemische Modifizierung der Cellulose kann ausgeführt werden mit Verbindungen, die Aldehyd-, Epoxy- oder Anhydridgruppen enthalten, während die weitere Chemikalie dann Amin-, Thiol-, Amid-, Sulfonamid- oder Sulfinsäuregruppen enthält - oder auch umgekehrt.

Es bestand die Aufgabe, ein Verfahren bereitzustellen, mit dem die Nassfestigkeit von cellulosehaltigen Produkten, insbesondere die Nassfestigkeit von Papiertüchern, erhöht werden soll, wobei die Produkte auch einen weichen Griff aufweisen sollen. Die Aufgabe wird durch die Erfindung gelöst.

Gegenstand der Erfindung ist ein Verfahren zur Behandlung von cellulosehaltigen Fasern oder Flächengebilde enthaltend cellulosehaltige Fasern mit einer Kombination von
(1) mindestens zwei primäre Amingruppen aufweisenden Verbindungen und
(2) mindestens eine β-Ketocarbonylgruppe aufweisenden Verbindungen.

Die bei dem erfindungsgemäßen Verfahren eingesetzten Verbindungen (1) können monomeren, oligomeren oder polymeren Charakter haben. Die Verbindungen (1) enthalten vorzugsweise mindestens 5 primäre Amingruppen (-NH₂), bevorzugt mindestens 20 primäre Amingruppen (-NH₂) und besonders bevorzugt mindestens 100 primäre Amingruppen (-NH₂).
Die Dicht an Amingruppen in Verbindungen (1) beträgt vorzugsweise mindestens 1,0 mεqu./g, bevorzugt mindestens 3,0 mεqu./g (mεqu./g = mÄquivalent pro g Substanz = Äquivalent pro kg Substanz).
Als Verbindungen (1) werden bevorzugt Polyamine eingesetzt.
Beispiele für Verbindungen (1) sind Polymerisate von Ethylenimin in linearer oder verzweigter Form, sowie Polyvinylamin. Letztere werden durch Polymerisation von N-Vinylformamid und nachfolgender Teil- oder Vollhydrolyse gewonnen, und sind kommerziell meist in Form wässriger Verdünnungen erhältlich.

Die bei dem erfindungsgemäßen Verfahren eingesetzten Verbindungen (2) können monomeren, oligomeren oder polymeren Charakter, bevorzugt polymeren Charakter haben. Die Verbindungen (2) enthalten vorzugsweise mindestens 2 β-Ketocarbonylgruppen und bevorzugt mindestens 3 β-Ketocarbonylgruppen.

Die β-Ketocarbonylgruppen in Verbindung (2) weisen vorzugsweise die Struktur der Formel

-Y' -C(O) -CHR⁴-C(O) -CH₂R⁴

oder deren tautomere Enolform der Formel

-Y' -C (O) -CR⁴=C (CH₂R⁴) -OH

auf, wobei
- Y' -O- , -NR²- oder: bevorzugt -O-, ist
- R²: ein Wasserstoffatom oder einen einwertigen Kohlenwasserstoffrest mit 1 bis 30 C-Atomen, vorzugsweise ein Wasserstoffatom, bedeutet, und
- R⁴: ein Wasserstoffatom oder einen einwertigen Kohlenwasserstoffrest mit 1 bis 18 C-Atomen, vorzugsweise ein Wasserstoffatom bedeutet.

Bei dem erfindungsgemäßen Verfahren können als Verbindungen (2) β-Ketocarbonylfunktionelle monomere Verbindungen (2a) der allgemeinen Formel

L(-Y-C(O)-CHR⁴-C(O)-CH₂R⁴)ₑ (I)

oder deren tautomere Enolformen eingesetzt werden, wobei
- e: eine ganze Zahl von 1 bis 20, vorzugsweise 2 bis 20, bevorzugt 2 bis 8, ist
- L: einen monomeren organischen Rest mit der dem Index e in Formel (I) entsprechenden Wertigkeit bzw. Funktionalität bedeutet, also einen ein- bis 20-funktionellen monomeren organischen Rest, vorzugsweise einen ein- bis 8- funktionellen monomeren Rest, bedeutet,
- Y: -O- oder -NR²-, bevorzugt -O-, ist
- R²: ein Wasserstoffatom oder einen einwertigen Kohlenwasserstoffrest mit 1 bis 30 C-Atomen, vorzugsweise ein Wasserstoffatom, bedeutet, und
- R⁴: ein Wasserstoffatom oder einen einwertigen Kohlenwasserstoffrest mit 1 bis 18 C-Atomen, vorzugsweise ein Wasserstoffatom bedeutet.

β-Ketocarbonylfunktionelle monomere Verbindungen (2a) können nach bekannten Verfahren hergestellt werden, vorzugsweise durch Umsetzung von Verbindungen der allgemeinen Formel

L(-YH)ₑ (II),

wobei L, Y und e die oben dafür angegebene Bedeutung haben, mit Diketenen, Diketen-Aceton-Addukten, sowie thermisch labilen Acetoacetaten.

Vorzugsweise ist der Rest L ein Kohlenwasserstoffrest mit 1 bis 18 Kohlenstoffatomen, der ein oder mehrere voneinander separate Sauerstoff- oder Stickstoffatome enthalten kann.

Beispiele für den β-Ketocarbonylfunktionellen monomeren Verbindungen (2a) zugrunde liegenden Verbindungen L(-YH)ₑ der Formel (II) sind

CH₃OH

C₂H₅OH

C₄H₉OH

C₃H₅OH

(C₂H₅)₂NH

C₄H₉NH₂

C₆H₅NHCH₃

HOC₂H₄NH₂

HOC₂H₄NHCH₃

HOC₂H₄OH

HOC₃H₆OH

CH₃C(CH₂OH)₃

C(CH₂OH)₄

HN(C₂H₄OH)₂

N(C₂H₄OH)₃

N(C₃H₆OH)₃

H₂NC₂H₄NH₂

H₂N(C₂H₄NH)₃H

(HOCH₂)₃CCH₂OCH₂C(CH₂OH)₃

Verbindungen (2) in polymerer Form sind ausgewählt aus der Gruppe der
- Organosiloxanpolymeren
- Polyester
- Polyether
- Polyacetale
- Polyetheracetale
- Polyesterpolyole
- Polyamide

Verbindungen (2) können entweder nur einer dieser Spezies entsprechen oder auch einer Kombination von zwei oder mehr Spezies aus dieser Gruppe entsprechen. Diese können wiederum in separaten Verbindungen vorliegen oder / und in einer Polymerart kombiniert sein, wie dies bei Siliconpolyethern der Fall ist.

Bei dem erfindungsgemäßen Verfahren können daher als Verbindungen (2) β-Ketocarbonylfunktionelle oligomere oder polymere Verbindungen (2b) der allgemeinen Formel

K(-Y-C(O)-CHR⁴-C(O)-CH₂R⁴)_{f} (III)

oder deren tautomere Enolformen eingesetzt werden,
wobei
- f: eine ganze Zahl von 1 bis 10 000, vorzugsweise 2 bis 2 000, bevorzugt 2 bis 200, ist
- K: einen oligomeren oder polymeren, organischen oder siliciumorganischen Rest mit der dem Index f in Formel (III) entsprechenden Wertigkeit bzw. Funktionalität bedeutet, also einen ein- bis 10 000-funktionellen oligomeren oder polymeren, organischen oder siliciumorganischen Rest bedeutet, und
- Y und R⁴: die oben dafür angegebene Bedeutung haben.

Beispiele für den Rest K sind daher Polymerreste ausgewählt aus den Gruppen der
Organopolysiloxane,
Polyester,
Polyether,
Polyacetale,
Polyetheracetale,
Polyesterpolyole,
Polyamide und
deren Mischungen und Copolymere.

β-Ketocarbonylfunktionelle polymere Verbindungen (2b) können nach bekannten Verfahren hergestellt werden, - analog der Herstellung der β-Ketocarbonylfunktionellen monomeren Verbindungen (2a) - vorzugsweise durch Umsetzung von Verbindungen der allgemeinen Formel

K(-YH)_{f} (IV),

wobei K, Y und f die oben dafür angegebene Bedeutung haben, mit Diketenen, Diketen-Aceton-Addukten, sowie thermisch labilen Acetoacetaten.

Beispiele für den β-Ketocarbonylfunktionellen polymeren Verbindungen (2b), zugrunde liegenden Verbindungen K(-YH)_{f} der Formel (IV) sind

MeO(C₂H₄O)ₚH

mit p = 2 - 20000

HO(C₂H₄O)ₚH

HO(C₃H₆O)_{q}H

mit q = 2 - 200

HO(C₄H₈O)_{q}H

HO-funktionelle Polyester aus Dicarbonsäure und Diolen
HO-funktionelle Polyester aus Dicarbonsäureestern und Diolen
HO-funktionelle Polyester aus Diolen und Caprolacton Polyesterpolyole
Teil- oder Vollhydrolysate von Polyvinylacetat
Teil- oder Vollhydrolysate von Polyvinylformamid
Siliconpolyether aus α,ω-Dihydroorganopolysiloxanen und Allylpolyethern
Siliconpolyether aus Siloxanen mit MeHSiO-Einheiten und Allylpolyethern
Polyaminoamide aus Dicarbonsäuren und Diethylentriamin
Polyaminoamide aus Dicarbonsäuremethylestern und Triethylentetramin
Aminosilicone enthaltend H₂NC₃H₆(Me)SiO-Gruppen
Aminosilicone enthaltend H₂NC₂H₄NHC₃H₆(Me)SiO-Gruppen
Kondensationsprodukte aus Polydimethylsiloxandiolen und sekundären α-Aminosilanen wie Cyclohexylaminomethylmethyldiethoxysilan,
wobei Me einen Methylrest bedeutet.

β-Ketocarbonylfunktionelle polymere Verbindungen (2b) sind bevorzugt ganz oder zumindest in Anteilen Organopolysiloxane oder Organopolysiloxane enthaltende Copolymere, wie Siliconpolyether. Die Organopolysiloxane oder deren Copolymere sind bevorzugt von linearer oder verzweigter Struktur. Hergestellt werden diese polymeren Verbindungen (2b) durch Umsetzung von Organopolysiloxanen oder deren Copolymere, die mindestens zwei Carbinolfunktionen (≡C-OH) und/oder primäre oder sekundäre SiC-gebundene Amingruppen enthalten, mit den selben Stoffen wie Verbindungen der allgemeinen Formel (II), d.h. mit Diketenen, Diketen-Aceton-Addukten, sowie thermisch labilen Acetoacetaten.

Da die Erhöhung der Nassfestigkeit von cellulosehaltigen Produkten herstellungsbedingt bevorzugt im "wet-end"-Bereich erfolgt, ist es von Vorteil, wenn die im erfindungsgemäßen Verfahren verwendeten Organosiloxanpolymere in Wasser löslich oder zumindest dispergierbar sind. Dafür sind Organosiloxanpolymere mit Anteilen höherer Polarität notwendig.

Dafür können bei dem erfindungsgemäßen Verfahren als Verbindungen (2) β-Ketocarbonylfunktionelle Organosiliciumverbindungen (2c) eingesetzt werden, die mindestens einen Si-gebundenen Rest der allgemeinen Formel 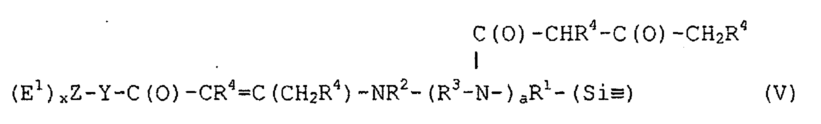 oder deren tautomere Enolformen
enthalten, wobei
-(Si≡) die Bindung zum Siliciumatom bedeutet,
- R¹: ein zweiwertiger organischer Rest mit 1 bis 6 Kohlenstoffatomen, der gegebenenfalls von einander separate Stickstoffatome enthalten kann, vorzugsweise ein zweiwertiger Kohlenwasserstoffrest mit 1 bis 6 C-Atomen bedeutet, der gegebenenfalls ein oder mehrere von einander separate Stickstoffatome enthalten kann,
- R³: einen zweiwertigen organischen Rest mit 1 bis 6 Kohlenstoffatomen, vorzugsweise mit 2 bis 6 Kohlenstoffatomen, bevorzugt einen zweiwertigen Kohlenwasserstoffrest mit 2 bis 6 Kohlenstoffatomen bedeutet,
- Y, R² und R⁴: die oben dafür angegebene Bedeutung haben,
- Z: ein zwei- bis sechswertiger organischer Rest mit einer monomeren, oligomeren oder polymeren Struktur ist, der einen gewichtsmäßigen Heteroatomgehalt von mindestens 10 % hat, der über C-Atome gebunden ist,
- E¹: eine monofunktionelle Endgruppe oder ein Si-C-gebundener Rest der allgemeinen Formel 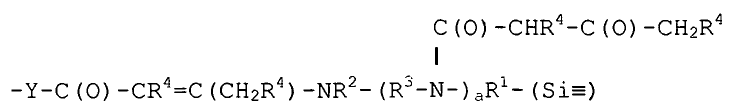 ist,
- a: eine ganze Zahl von 1 bis 5, vorzugsweise 1 oder 2 ist und
- x: 0 oder eine ganze Zahl von 1 bis 5 ist, vorzugsweise 0 oder 1 ist, bevorzugt 1 ist.

Die β-Ketocarbonylfunktionelle Organosiliciumverbindungen (2c) werden hergestellt
indem in einer ersten Stufe
Aminosiliciumverbindungen (i), die mindestens eine Si-C gebundene Aminogruppe A der allgemeinen Formel enthalten

HNR²-(R³-NH-)ₐR¹-(Si≡) (VI)

mit Verbindungen (ii), die mindestens einen β-Ketocarbonylfunktionellen Rest enthalten, der allgemeinen Formel

(E²)ₓZ-Y-C(O)-CR⁴=C(CH₂R⁴)-OH (VIIa)

oder

(E²)ₓZ-Y-C(O)-CHR⁴-C(O)-CH₂R⁴ (VIIb)

umgesetzt werden, wobei
Organosiliciumverbindungen (2c') der allgemeinen Formel

(E²)ₓZ-Y-C(O)-CR⁴=C(CH₂R⁴)-NR₂-(R³-NH-)ₐR¹-(Si≡) (V'),

erhalten werden, wobei
R¹, R², R³, R⁴, Y, Z, a und x die oben dafür angegebene Bedeutung haben, und
E² eine monofunktionelle Endgruppe oder ein Rest der allgemeinen Formel -Y-C(O)-CR⁴=C(CH₂R⁴)-OH oder -Y-C(O)-CHR⁴-C(O)-CH₂R⁴ ist,
und in einer zweiten Stufe
die in der ersten Stufe erhaltenen Organosiliciumverbindungen (2c')
mit Diketenen (iii) der allgemeinen Formel 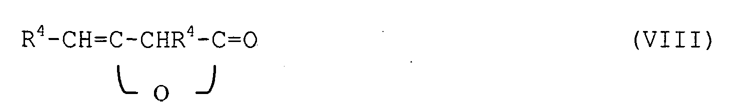 umgesetzt werden, wobei
- R⁴: die oben dafür angegebene Bedeutung hat.

Bei dem erfindungsgemäßen Verfahren werden die Aminosiliciumverbindungen (i) in einer ersten Stufe mit Acetoacetylverbindungen (ii) der tautomeren Formen (VIIa) oder (VIIb) umgesetzt und in einer nachfolgenden zweiten Stufe mit Diketenen (iii) umgesetzt. Diese Reaktionsfolge kann vorteilhaft in einem Eintopfverfahren ausgeführt werden. Eine besonders bevorzugte Verfahrensweise ist die vorgelagerte Herstellung von Verbindung (ii) aus den zugrunde liegenden Basisverbindungen (iv) durch Umsetzung von diesen mit Diketenen (iii), wonach bei Umsatzende Aminosiliciumverbindungen (i) zudosiert werden und danach durch weiteres Zudosieren von Diketenen (iii) nach deren Umsatz die erfindungsgemäßen Organosiliciumverbindungen (2c) in einem besonders wirtschaftlichen Verfahren erhalten werden.

Bevorzugte Beispiele für Si-C gebundene Aminogruppen A der Formel (VI) sind

H₂N-C₂H₄-NH-CH₂-

H₂N-C₃H₆-NH-CH₂-

H₂N-C₃H₆-NH-C₃H₆-NH-CH₂-

H₂N-C₂H₄-NH-C₃H₆-

H₂N-C₃H₆-NH-C₃H₆-

H₂N-C₂H₄-NH-C₂H₄-NH-C₃H₆-

H₂N-C₃H₆-NH-C₃H₆-NH-C₃H₆-

H₂N-C₂H₄-NH-C₄Hs-

R² ist bevorzugt ein Wasserstoffatom.
R³ ist besonders bevorzugt ein Alkylenrest mit 2 bis 6 Kohlenstoffatomen.
R⁴ ist bevorzugt ein Wasserstoffatom.

Z hat bevorzugt einen gewichtsmäßigen Heteroatomgehalt von mindestens 20 % und besonders bevorzugt mindestens 25 %.

Aminosiliciumverbindungen (i) sind vorzugsweise Organopolysiloxane mit mindestens einem Si-C gebundenen Rest A der Formel (VI).

Bevorzugt als Aminosiliciumverbindungen (i) sind Organopolysiloxane der allgemeinen Formel

A_{g}R_{3-g}SiO(SiR₂O)₁(SiRAO)ₖSiR_{3-g}A_{g} (IXa),

(R'O)R₂SiO(SiR₂O)₁(SiRAO)ₖSiR₂(OR') (IXb),

wobei A die oben dafür angegebene Bedeutung hat,
R ein einwertiger Kohlenwasserstoffrest mit 1 bis 18 C-Atomen bedeutet,
R' ein Wasserstoffatom oder einen einwertigen Kohlenwasserstoffrest mit 1 bis 18 C-Atomen, vorzugsweise ein Wasserstoffatom, bedeutet,
g 0 oder 1,
k 0 oder eine ganze Zahl von 1 bis 30 ist und
l 0 oder eine ganze Zahl von 1 bis 1000 ist,
mit der Maßgabe, dass mindestens ein Rest A je Molekül enthalten ist.

Bevorzugt enthalten Aminosiliciumverbindungen (i) Amingruppenkonzentrationen im Bereich von 0,01 bis ca. 10mεquiv./g, besonders von ca. 0,05 bis 5 mεquiv./g. Bevorzugte Viskositäten sind im Bereich von ca. 100 bis 50 000 mPa·s bei 25°C, wobei der Bereich 500 bis 10 000 mPa·s bei 25°C besonders bevorzugt ist.

Bevorzugt werden die Aminosiliciumverbindungen (i) ohne vorherige Umwandlung der Aminogruppen mittels Schutzgruppenreagenzien wie Aldehyde oder Ketone eingesetzt.

Bevorzugt werden die Aminosiliciumverbindungen (i) aus "Diamino"-Monomeren, wie Aminoethylaminopropyl- oder Aminoethylaminoisobutylsilanen hergestellt, wobei die Si-C gebundene Aminogruppe A sowohl einen primären als auch einen sekundären Aminrest, gebunden am selben Si-Atom, enthält. Bevorzugt reagieren in den Resten A die primären Aminreste mit den Verbindungen (ii), wobei die sekundären Aminreste als basische Zentren erhalten bleiben.

Die Verbindungen (ii) können als Reaktionspartner für die Aminosiliciumverbindung (i) in zwei tautomeren Formen der Formel (VIIa) und (VIIb) eingesetzt werden.

Die Verbindungen (ii) werden vorzugsweise erhalten, indem die zugrunde liegenden Basisverbindungen (iv) der Formel (E²)ₓZ-Y (X), die an den freien Valenzen mit Wasserstoff abgesättigt sind,
wobei E², Z, Y und x die oben dafür angegebene Bedeutung haben, mit Diketenen, Acetylketenen, Alkyldiketenen, Diketen-Acetonaddukten oder Acetoacetaten, bevorzugt mit Diketenen oder dessen Acetonaddukten, nach in der Literatur bekannten Verfahren umgesetzt werden.

Der Rest "Z" wird definiert als organischer Rest, der aufgrund seiner Bi- bis Hexafunktionalität mit 2 bis 6 weiteren Gruppen E oder Y verbunden ist: Die Summe aus "E" plus "Y" entspricht in ihrem Zahlenwert dieser Bi- bis Hexafunktionalität. Im einfachsten Fall, der auch bevorzugt ist, ist "Z" bifunktionell, d.h. zweiwertig. In diesem Fall ist "Z" entweder an zwei Y-Gruppen.oder an eine Y-Gruppe und eine monofunktionelle Endgruppe gebunden. Monofunktionelle Endgruppen können gesättigte oder ungesättigte Kohlenwasserstoffreste mit 1 bis 18 C-Atomen sein, oder auch Acylreste wie der Acetat-. Butyrat-, Palmitat- oder Stearatrest, wie auch der Acrylat-, Methacrylat- oder der Benzoatrest.

Der Rest "Z" hat einen Heteroatomgehalt von mindestens 10 Gew.-%. Heteroatome sind ausgewählt aus der Gruppe der O-, N-, B-, P- und S-Atome; bevorzugt O- und N-Atome, besonders bevorzugt O-Atome. Der Rest "Z" hat die Aufgabe, höhere Polarität und damit ein höheres Maß an Hydrophilie in die erfindungsgemäßen Organosiliciumverbindungen (1) einzubringen, weshalb ein höherer Gehalt an Heteroatomen bevorzugt ist. Besonders bevorzugt ist der Rest "Z" ein Polyether oder Polyester. Beispiele für Polyether sind Polyethylenoxid, Polypropylenoxid oder Polybutylenoxid (auch poly-THF) sowie auch Mischpolymerisate der allg. Formel (CₐH₂ₐO)ₙCₐH₂ₐ mit a = 2, 3 oder 4 und n eine ganze Zahl von 1 bis 500, bevorzugt von 1 bis 100 und besonders bevorzugt von 5 bis 60.

Tri- bis hexafunktionelle Reste "Z" werden normalerweise von ebenso funktionellen Alkoholen wie auch von Aminen gestartet. So liefert Trimethylolpropan oder Ammoniak mit Ethylenoxid Basisverbindungen (iv) mit "Z" der allgemeinen Formel C₂H₅C[CH₂(OC₂H₄)_{m/3}]₃ oder N[C₂H₄(OC₂H₄)_{(m-1)/3}]₃,
wobei m die Gesamtzahl der Mole Ethylenoxid bedeutet, vorzugsweise 5 bis 100 ist, deren freie Valenzen mit Sauerstoffatomen (Y) verbunden sind, die ihrerseits mit Wasserstoff abgesättigt sind. Zur Herstellung von Basisverbindungen (iv) mit höherer Funktionalität werden üblicherweise die entsprechend höher funktionalisierten Carbinol- oder Aminoverbindungen verwendet: Tetrafunktionalität aus Pentaerythrit oder Ethylendiamin, Hexafunktionalität aus Sorbit oder Tris-(aminoethyl)amin.

Entsprechende Polyester können aus gleichen oder ähnlichen Starterverbindungen durch Ringöffnungspolymerisation von cyclischen Estern (Lactonen) nach allgemein bekannten Verfahren hergestellt werden. Bevorzugte Basisverbindungen (iv) sind Polyethylenglycol, Polypropylenglycol und deren Mischpolymerisate, sowie deren Monoalkylether. Letztere sind ein Spezialfall mit "Y" gleich Sauerstoff und "E" gleich eine Alkylgruppe (Methyl, Alkyl, Butyl). Bezüglich der Umsetzung zu Verbindungen (ii), sind diese Basisverbindungen (iv) monofunktionell. Gegenüber den Aminosiliciumverbindungen (i) sind die daraus hergestellten Verbindungen (ii) ebenso monofunktionell und dienen demnach zur Absättigung von Aminogruppen mit polaren Polymeren.

Im Gegensatz dazu erhält man aus Polyalkylenglycolen bifunktionelle Reaktionspartner (ii), die gegenüber ebenfalls bifunktionellen Aminosiliciumverbindungen (i), d.h. die zwei Aminogruppen A pro Molekül enthalten, kettenverlängernd wirken. Auf diese Weise können auch verzweigte Produkte (2c) erhalten werden, sofern die Aminosiliciumverbindungen (i) mindestens drei Aminogruppen A pro Molekül enthalten. Es entsteht eine alternierende Siloxan-Polyetherstruktur.

Die überraschend hohe Selektivität der Verbindungen (ii) mit primären Aminresten in den Aminogruppen A der Aminosiliciumverbindungen (i) erlaubt eine praktisch vollständige Umsetzung der H₂N-Reste zu Enaminen, weshalb in der ersten Stufe des Verfahrens zur Herstellung von (2c) bevorzugt ein stöchiometrisches Verhältnis von primären NH₂-Resten in Aminogruppen A von Verbindungen (i) zu Acetoacetyl-Gruppen in Verbindungen (ii) in der Nähe von 1,0 eingesetzt wird. Besonders bevorzugt ist dieses Verhältnis 0,8 bis 1,0. Es kann allerdings auch über 1,0 liegen. In diesem Fall werden nicht alle primären Aminreste umgesetzt, die dann aber zusätzlich zur Umsetzung mit Diketenen (iii) zur Verfügung stehen. Diese Vorgehensweise ist zwar technisch möglich, aber nicht bevorzugt.

Bei dem Verfahren zur Herstellung von (2c) können als Diketene (iii) auch deren Acetonaddukte eingesetzt werden. Bevorzugt werden als Diketene (iii) 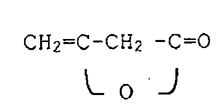 oder deren Acetonaddukte
eingesetzt.

In dem Verfahren zur Herstellung von (2c) beträgt bei der anschließenden Umsetzung mit Diketenen (iii) das stöchiometrische Verhältnis von sekundären -NH-Gruppen in Aminogruppen A von Verbindungen (i) zu Diketenen (iii) 5:1 bis 0,5:1, bevorzugt 2:1 bis 0,8:1. Besonders bevorzugt ist ein Verhältnis von ca. 1:1.

Das Verfahren zur Herstellung von (2c) kann in Gegenwart von organischen Lösungsmitteln erfolgen oder die erfindungsgemäßen Produkte (2c) können mit organischen Lösungsmitteln verdünnt werden.

Die Umsetzung der Verbindungen (ii) mit Aminosiliciumverbindungen (i) in der ersten Stufe des Verfahrens zur Herstellung von (2c) läuft spontan auch ohne externe Erwärmung ab, doch wirkt sich Wärmezufuhr beschleunigend auf die Synthese von (2c) aus.

Das Verfahren zur Herstellung von (2c) wird vorzugsweise bei Temperaturen von 10 bis 100°C, bevorzugt 40 bis 80°C, durchgeführt. Weiterhin wird das Verfahren vorzugsweise beim Druck der umgebenden Atmosphäre durchgeführt, kann aber auch bei höheren und niedrigeren Drücken durchgeführt werden.

Die Behandlung der cellulosehaltigen Fasern oder Flächengebilde enthaltend cellulosehaltige Fasern kann in zwei verschiedenen Verfahrensvarianten erfolgen.

In einer Verfahrensvariante erfolgt die Behandlung der cellulosehaltigen Fasern oder Flächengebilde enthaltend cellulosehaltige Fasern vorzugsweise zuerst mit (1) mindestens zwei primäre Amingruppen aufweisenden Verbindungen und
dann anschließend mit (2) mindestens eine β-Ketocarbonylgruppe aufweisenden Verbindungen.
Die Applikation der Verbindung (2) erfolgt erst nach dem Einwirken der Verbindung (1) auf die cellulosehaltigen Fasern oder Flächengebilde enthaltend cellulosehaltige Fasern.

In einer zweiten Verfahrensvariante erfolgt die Behandlung der cellulosehaltigen Fasern oder Flächengebilde enthaltend cellulosehaltige Fasern vorzugsweise
mit einer Mischung aus (1) mindestens zwei primäre Amingruppen aufweisenden Verbindungen und (2) mindestens eine β-Ketocarbonylgruppe aufweisenden Verbindungen, wobei vor der Behandlung die Mischung aus (1) und (2) hergestellt wird.
Es wird also erst eine Vormischung aus (1) und (2) hergestellt und dann die Vormischung auf die cellulosehaltigen Fasern oder Flächengebilde enthaltend cellulosehaltige Fasern appliziert.

Bei dem erfindungsgemäßen Verfahren werden Verbindungen (1) und (2) in solchen Mengen eingesetzt, dass die Verbindungen (1) in Mengen von vorzugsweise 0,1 bis 1000 Mol, bevorzugt 0,5 bis 500 Mol, besonders bevorzugt 1,1 bis 500 Mol Amingruppe, jeweils bezogen auf 1 Mol β-Ketocarbonylgruppe in Verbindungen (2), eingesetzt werden.

Bespiele für cellulosehaltige Fasern, die erfindungsgemäß behandelt werden, sind alle cellulosehaltige Fasern und alle wässrigen cellulosehaltigen Faserbreie, aus denen Papierprodukte hergestellt werden können, wie gebleichte Fasern, recycelte Fasern, Fasern, die über chemische Aufschlussverfahren wie das Sulfat- oder Sulfitverfahren hergestellt werden, Fasern, die aus pflanzlichen Rohstoffen (Faserpflanzen) hergestellt werden und die einen hinreichenden Cellulose-Gehalt besitzen, und Holzstoffe, die vorwiegend durch mechanische Zerfaserung von Holz erzeugt werden. Bei den cellulosefaserhaltigen Materialien handelt es sich um Materialien wie Holz, Grasfasern, Stroh, Bambus, Maisfasern und Hanf jeweils in beliebigen Formen wie Schnitzel, Span oder Sägemehl.

Beispiele für Flächengebilde enthaltend cellulosehaltige Fasern sind alle aus cellulosehaltigen Fasern hergestellte Papierprodukte, wie Papiertücher, Toilettenpapier, Taschentücher, Küchenpapier, Papierservietten, Kosmetiktücher. Bei dem erfindungsgemäß zu behandelnden Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m2, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Vorzugsweise werden die Verbindungen (1) und (2) bei der Behandlung der cellulosehaltigen Fasern oder Flächengebilde enthaltend cellulosehaltige Fasern in Form von wässrigen Lösungen oder wässrigen Dispersionen eingesetzt werden.
In den wässrigen Lösungen oder wässrigen Dispersionen ist Verbindung (1) vorzugsweise in Mengen von 0,1 bis 20 Gew.-%, bevorzugt 0,2 bis 10 Gew.-% enthalten.
In den wässrigen Lösungen oder wässrigen Dispersionen ist Verbindung (2) vorzugsweise in Mengen von 0,1 bis 50 Gew.-%, bevorzugt 0,5 bis 20 Gew.-% enthalten.

Die Behandlung von cellulosehaltigen Fasern oder Flächengebilde enthaltend cellulosehaltige Fasern kann nach den im Stand der Technik bekannten Verfahren, insbesondere nach den bei der Herstellung und Ausrüstung von Papierprodukten bekannten Verfahren erfolgen, wie sie beispielsweise in US 6,824,650 B2, Spalte 12, Zeile 1 bis Spalte 13, Zeile 15 beschrieben sind.

Die Herstellung von Papierprodukten, wie sie erfindungsgemäß behandelt werden, ist in US 6,824,650 B2, Spalte 15, Zeile 20 bis Spalte 19, Zeile 11 beschrieben.

Einige Behandlungsmöglichkeiten sind beispielhaft erwähnt:
Die Behandlung kann durch Dosieren der Verbindungen (1) und (2) - entweder einzeln in aufeinander folgenden Schritten oder zusammen als Vormischung aus (1) und (2) - zu dem wässrigen cellulosehaltigen Faserbrei, aus dem die Flächengebilde enthaltend cellulosehaltige Fasern, wie Papierprodukte, hergestellt werden, erfolgen oder während des Einkonzentrations- oder Trocknungsprozesses.
Die Behandlung kann auch durch Sprühen der Verbindungen (1) und (2) - entweder einzeln in aufeinander folgenden Sprühschritten oder zusammen als Vormischung aus (1) und (2) - auf die Flächengebilde enthaltend cellulosehaltige Fasern, wie Papierprodukte, erfolgen. Die Flächengebilde können dabei feucht oder trocken sein.
Die Behandlung kann auch durch Beschichtung der Oberfläche der Flächengebilde, wie Papierprodukte, mit den Verbindungen (1) und (2) - entweder einzeln in aufeinander folgenden Schritten oder zusammen als Vormischung aus (1) und (2) - erfolgen.
Die Behandlung kann auch durch Imprägnierung der nassen oder trockenen Flächengebilde mit den Verbindungen (1) und (2) erfolgen - entweder einzeln in aufeinander folgenden Schritten oder zusammen als Vormischung aus (1) und (2) - wobei die Flächengebilde ganz oder teilweise damit penetriert werden.

Gegenstand der Erfindung sind weiterhin Papierprodukte enthaltend
Flächengebilde enthaltend cellulosehaltige Fasern, wobei die Flächengebilde weiterhin eine Kombination von
(1) mindestens zwei primäre Amingruppen aufweisenden Verbindungen und
(2) mindestens eine β-Ketocarbonylgruppe aufweisenden Verbindungen,
enthalten.
Die Verbindung (1) und (2) werden dabei vorzugsweise zu cellulosehaltigen Faserbreien, die zur Herstellung der Flächengebilde eingesetzt werden, zugegeben.

Die Verbindungen (1) und (2) werden vorzugsweise jeweils in Mengen von 0,1 bis 50 Gew.-%, bevorzugt 0,2 bis 20 Gew.-%, bezogen auf das Gesamtgewicht der trockenen cellulosehaltigen Fasern oder trockenen Flächengebilde enthaltend cellulosehaltige Fasern eingesetzt.

Zusätzlich zu den Verbindungen (1) und (2) können noch weitere Stoffe mitverwendet werden, die üblicherweise bei der Behandlung von cellulosehaltigen Fasern oder Flächengebilde enthaltend cellulosehaltige Fasern mitverwendet werden. Beispiel für weitere Stoffe sind Entschäumer, Trockenfestmittel wie (modifizierte) Stärke, Carboxymethylcellulose oder(modifizierte) Polyacrylamide, Weichmacher, Entwässerungshilfsmittel oder Retentionshilfsmittel.

Die erfindungsgemäße Behandlung wird vorzugsweise bei Temperaturen von 5 bis 60°C, bevorzugt 15 bis 35°C durchgeführt. Die erfindungsgemäße Behandlung wird vorzugsweise beim Druck der umgebenden Atmosphäre also bei 1020 hPa durchgeführt, kann aber auch bei höheren oder niedrigeren Drücken durchgeführt werden.

### Beispiele:

### Verbindung (1):

Sämtliche Tests beziehen sich auf die Kombination von (1) mit verschiedenen Verbindungen (2). Als Verbindung (1) wurde ausschließlich Lupamin 9095 (BASF) eingesetzt, ein hochmolekulares Polyvinylformamid mit ca. 95% Hydrolysegrad und einer Amingruppenkonzentration von ca. 3,8 mεquiv./g der 20%igen wässrigen Lösung (Handelsware).

### Herstellungsbeispiele für die Verbindung (2):

### Beispiel 1:

73,1g N,N,N,N-Tetrakis(2-hydroxypropyl)ethylendiamin werden auf 50°C erwärmt. Danach werden 92 g Diketen unter Kühlung so zudosiert, dass die Temperatur des Reaktionsgemisches zwischen 50 und 70°C gehalten wird. Man lässt noch eine Stunde nachreagieren und entfernt überschüssiges Diketen im Vakuum bei 100°C. Man erhält ein schwach orange gefärbtes Produkt mit einem Acetoacetatgehalt von 6,3 mεquiv./g.

### Beispiel 2:

250,5 g eines trimethylsilylterminierten Aminosiloxans, welches Dimethylsiloxy- und Aminoethylaminopropylmethylsiloxyeinheiten enthält und eine Konzentration von 2,24 Gew.-% basischem Stickstoff aufweist, werden mit 411,4 g eines Polyetheracetylacetats der durchschnittlichen Formel CH₃O(C₂H₄O)_{19,4}(C₃H₆O)_{17,1}C(=O)-CH₂C(=O)-CH₃ vermischt und auf 70°C erwärmt. Unter Aufklaren nimmt das Reaktionsgemisch stark an Viskosität zu, worauf 70 g Isopropanol zudosiert werden. Bei 70°C werden langsam 16,8 g Diketen zugetropft und nach einer weiteren Stunde insgesamt weitere 156 g Isopropanol. Das hochviskose Produkt weist einen Festgehalt von 75% und einen Acetoacetamidgehalt von 0,22 mεquiv./g auf.

### Beispiel 3:

400 g der in Beispiel 2 erhaltenen 75%-igen Lösung werden mit 0,75 g Isophorondiamin bei 25 °C homogen vermischt und langsam auf 40 °C erwärmt. Unter erheblicher Viskositätserhöhung erhält man in 2 Stunden eine klare, hochviskose Polymerlösung mit einem Acetoacetamidgehalt von 0,20 mεquiv./g.

### Beispiel 4:

13,3 g der in Beispiel 2 erhaltenen 75%-igen Lösung werden mit 10,0 g des Diacetoacetats von PEG 1000 homogen gemischt und mit Isopropanol auf 200 g verdünnt. Die klare Lösung enthält 0,105 mεquiv./g. β-Ketocarbonylgruppen pro g.

### Beispiel 5:

In 200 g eines Siliconpolyethers hergestellt aus 2 Teilen Allylpolyether der Formel CH₂=CH-CH₂O(C₂H₄O)₁₀H und 1 Teil Hydrogensiloxan der Formel HO(HSiMeO)_{14,3}(SiMe₂O)₆₀H werden 0,1 g Triethylamin und danach 20,6 g Diketen langsam zudosiert. Nach exothermer Reaktion hält man den Ansatz noch eine Stunde auf 70°C. Man erhält ein schwach bräunliches Produkt, das unverdünnt eine Viskosität von ca. 20000 mm²/s aufweist. Die Konzentration an Acetoacetat beträgt 1,10 mεqu/g.

### Beispiel 6:

50 g des in Beispiel 5 erhaltenen polymeren Acetoacetats werden nach Zutropfen von 0,2 g einer 10 %-igen Lösung von p-Toluolsulfonsäure in THF bei 100 °C weiter kondensiert, wodurch man ein gelartiges Hochpolymer erhält, welches in der gleichen Menge Isopropanol klar löslich ist. Die 50 %-ige Lösung enthält Acetoacetatgruppen in Höhe von 0,55 mεqu./g.

### Beispiel 7:

Durch Verdünnen einer handelsüblichen wässrigen Lösung (Lupamin 9095, BASF) eines hochmolekularen Polyvinylamins (ca. 19 mEqu. NH2 pro g) mit der selben Menge Wasser wird eine 10 %-ige Lösung hergestellt. Zu 200 g dieser Verdünnung werden 6,0 g einer 10 %-igen wässrigen Lösung des Diacetoacetats von PEG 2000 gegeben und homogen gemischt. Nach 3 Tagen erhält man eine klare wässrige Lösung, die kein nachweisbares Acetoacetat mehr enthält. Das Gemisch ist eine anwendungsfertige 1K-Formulierung aus den Verbindungen (1) und (2). Das Molverhältnis von Aminozu Acetoacetatgruppen beträgt ca. 700 : 1.

### Beispiel 8:

Zur Herstellung einer 10 %-igen wässrigen Lösung der Kombination von Verbindung (1) mit einer ausschließlich monofunktionellen Verbindung (2) werden nacheinander 24 g Lupamin 9095 (BASF) 67,2 g Wasser und 4,8 g Ethylacetoacetat vermischt. Man erhält eine klare farblose Mischung, die nach 24 Stunden mit 0,65 g Essigsäure versetzt wird. Das Mischverhältnis von Amino- zu Acetoacetatgruppen beträgt ca. 2,5 : 1.

### Beispiel 9: Trocken- und Nassfestigkeitstests:

Die Trocken- und Nassfestigkeit von Papiertüchern wird geprüft.

Unabhängig vom Herstellungsverfahren kommen alle Beispiele der Verbindungen (2) als 10 %-ige wässrige Lösung zur Anwendung. Dies gilt auch für die 1K-Formulierung der Beispiele 7 und 8.

Bei 2K-Anwendungen wird das Polyamin (1) grundsätzlich zuerst, als 1 %-ige wässrige Lösung nach dem unten beschriebenen Sprühvorgang appliziert und bei 105°C 5 Minuten getrocknet. Der Wirkstoffauftrag von Verbindung (1) ist in der Tabelle angegeben und beträgt 0,5 bzw. 0,9 Gew.-%, bezogen auf das Trockengewicht des Papiertuches.
Damit ist das Substrat, das Papiertuch, vorkonditioniert.

Das vorgegebene Papiertuch mit einer sehr niedrigen Reißfestigkeit wird auf eine Größe von 1 x b = 15 x 35 cm zugeschnitten. Dieses wird in eine senkrecht aufgestellte Einspannvorrichtung faltenfrei eingelegt, und mit einer Sata 2000 Dekor Sprühpistole von oben nach unten, gleichmäßig ( 3 x pro Blatt Papiertuch) besprüht. Die Einstellungen an der Sprühpistole bleiben immer gleich und betragen 2 bar Druckluft bei einer Sprühdüse von 0,5 mm. Je nach Produktmenge und Typ wird dieser Vorgang wiederholt bis sich auf dem Papiertuch 4,8 - 5,2 Gew.-% aktives Produkt (= Verbindung (2)) befindet. In der Tabelle ist der Wirkstoffauftrag von Verbindung (2) in Gew.-% bezogen auf das Trockengewicht des Papiertuches angegeben. Dieser Produktauftrag wird durch Wiegen des unbeschichteten sowie des nassen Papiertuches bestimmt. Der Produktauftrag erfolgt einseitig. Anschließend wird das beschichtete Papiertuch bei 105°C 5 min getrocknet.

**Tabelle: Testergebnisse der Prüfung auf Trocken-und Nassfestigkeit von Papiertüchern**

| Verbindung (2) | (2) in %* | Polyamin(1) in %* | Weichgriff | TEA (nass) | TEA (trocken) |
|---|---|---|---|---|---|
| Beispiel 1 | 4,9 | 0,5 | - | 11 | 42 |
| Beispiel 2 | 5,0 | 0,9 | + | 11 | 32 |
| Beispiel 3 | 4,8 | 0,5 | + | 9 | 32 |
| Beispiel 4 | 5,0 | 0,5 | + | 7 | |
| Beispiel 5 | 5,0 | 0,5 | + | 6 | 23 |
| Beispiel 6 | 5,1 | 0,5 | + | 7 | 29 |
| Vergleich 1 | - | 0,5 | -- | 6 | 42 |
| Vergleich 2 | - | 0,9 | -- | 9 | |
| Nullprobe | - | - | 0 | 2 | 31 |
| Beispiel 7** | 0,02 | 0,5 | - | 8 | 46 |
| Beispiel 8** | 0,5 | 0,5 | - | 8 | 50 |

| | | | | | |
|---|---|---|---|---|---|
| * Der Wirkstoffauftrag ist angegeben in Gewichts-% bezogen auf das Trockengewicht des Papiergewebes. ** Polyamin (1) und Verbindung (2) vorgemischt appliziert. | | | | | |

Der Weichgriff wurde beurteilt nach weicher (+) oder härter (- bzw. --) als die Nullprobe.

### Beschreibung der Trockenreißfestigkeit (Siehe DIN EN 29 073 Teil 3 bzw. ISO 9073-3):

Das zu prüfende Papiertuch wird in mindestens 10 Streifen von einer Minimum-Länge von 152 mm und einer Breite von 25 mm in Laufrichtung geschnitten.
Davon werden 5 Prüflinge zur Messung der Trockenreißfestigkeit und 5 für die Nassfestigkeit verwendet.
Die Prüflinge werden in das Zuggerät ZWICK 1446, ebenfalls in Laufrichtung, eingespannt und folgende Parameter eingestellt: Zuggeschwindigkeit = 0,21mm/s ( 12,7 mm/min)
Probenlänge = 152 mm ( 6 inches )
Durch Starten des Gerätes wird die Kraft in F-Max [N bzw g/force] die Dehnung bei F-max [%] sowie die gebildete Fläche (Kraft-Dehnungskurve) TEA bzw. Arbeit bis Bruch in [J] mitaufgenommen.
Durch die Eingabe des Gewichtes kann auch noch der Feinheitsfestigkeitsfaktor in cn/tex bestimmt werden.
Dieser Vorgang wird mindestens 5x wiederholt und dabei wird der Mittelwert und die Standardabweichung von jedem Parameter erfasst.

### Beschreibung der Nassreißfestigkeit (Siehe DIN ISO 3781):

Bei der Messung der Nassreißfestigkeit wird das Papiertuch in der Mitte durch kurzes Eintauchen in VE-Wasser mindestens 25 mm bis höchstens 50 mm angefeuchtet. Dabei bleiben die Enden zum Einspannen trocken. (Siehe auch Punkt 8.2 in DIN ISO 3781 ) Die Auswertung und Einstellungen sind gleich dem Verfahren der Trockenreißfestigkeit.

Die von den Prüfstreifen aufgenommene Arbeit (in Joule) wurde verglichen mit der Nullprobe (TEA = 2) und den nur mit Polyamin (1) ausgerüsteten Streifen (TEA = 6 bzw. 9), Vergleichsversuch 1 bzw. 2. Die Verbesserung der Nassfestigkeit der Prüfstreifen durch die zusätzliche Verbindung (2) wird durch die höheren TEA-Werte deutlich, bei durchwegs verbesserten Weichgriff im Vergleich zu den nur mit (1) ausgerüsteten Prüfstreifen. In den meisten Fällen wird sogar eine Weichgriffverbesserung gegenüber der Nullprobe erreicht.

Alle Teststreifen erwiesen sich als hydrophil mit Tropfeneinsinkzeiten von weniger als zwei Sekunden.

## Patentansprüche

1. Verfahren zur Behandlung von cellulosehaltigen Fasern oder Flächengebilde enthaltend cellulosehaltige Fasern mit einer Kombination von
(1) mindestens zwei primäre Amingruppen aufweisenden Verbindungen und
(2) mindestens eine β-Ketocarbonylgruppe aufweisenden Verbindungen.

2. Verfahren nach Anspruch 1, **dadurch gekennzeichnet, dass** die Verbindungen (2)
β-Ketocarbonylgruppen der allgemeinen Formel
-Y'-C(O)-CHR⁴-C(O)-CH₂R⁴
oder deren tautomere Enolform der Formel
-Y'-C(O)-CR⁴=C(CH₂R⁴)-OH
enthalten, wobei
Y' -O-, -NR²- oder 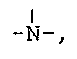 bevorzugt -O-, ist
R² ein Wasserstoffatom oder einen einwertigen Kohlenwasser- stoffrest mit 1 bis 30 C-Atomen, vorzugsweise ein Wasserstoffatom, bedeutet, und
R⁴ ein Wasserstoffatom oder einen einwertigen Kohlenwasser- stoffrest mit 1 bis 18 C-Atomen, vorzugsweise ein Wasserstoffatom bedeutet.

3. Verfahren nach Anspruch 1 oder 2, **dadurch gekennzeichnet, dass** als Verbindungen (1) Polyamine eingesetzt werden.

4. Verfahren nach Anspruch 1, 2 oder 3, **dadurch gekennzeichnet, dass** Als Verbindungen (2) β-Ketocarbonylfunktionelle monomere Verbindungen (2a) der allgemeinen Formel
L(-Y-C(O)-CHR⁴-C(O)-CH₂R⁴)ₑ (I)
oder deren tautomere Enolformen eingesetzt werden, wobei
e eine ganze Zahl von 1 bis 20, vorzugsweise 2 bis 20, bevorzugt 2 bis 8, ist
L einen monomeren organischen Rest mit der dem Index e in Formel (I) entsprechenden Wertigkeit bzw. Funktionalität bedeutet, also einen ein- bis 20-funktionellen monomeren organischen Rest bedeutet, und
Y -O- oder -NR²-, bevorzugt -O-, ist
R² ein Wasserstoffatom oder einen einwertigen Kohlenwasser- stoffrest mit 1 bis 30 C-Atomen, vorzugsweise ein Wasserstoffatom, bedeutet, und
R⁴ ein Wasserstoffatom oder einen einwertigen Kohlenwasser- stoffrest mit 1 bis 18 C-Atomen, vorzugsweise ein Wasserstoffatom bedeutet.

5. Verfahren nach einem der Ansprüche 1 bis 3, **dadurch gekennzeichnet, dass** als Verbindungen (2) β-Ketocarbonylfunktionelle oligomere oder polymere Verbindungen (2b) der allgemeinen Formel
K(-Y-C(O)-CHR⁴-C(O)-CH₂R⁴)_{f} (III)
oder deren tautomere Enolformen eingesetzt werden, wobei
f eine ganze Zahl von 1 bis 10 000, vorzugsweise 2 bis 2 000, bevorzugt 2 bis 200, ist
K einen oligomeren oder polymeren, organischen oder siliciumorganischen Rest mit der dem Index f in Formel (III) entsprechenden Wertigkeit bzw. Funktionalität bedeutet, also einen ein- bis 10 000-funktionellen oligomeren oder polymeren, organischen oder siliciumorganischen Rest bedeutet, und
Y und R⁴ die in Anspruch 4 dafür angegebene Bedeutung haben.

6. Verfahren nach Anspruch 5, **dadurch gekennzeichnet, dass** der Rest K in den β-Ketocarbonylfunktionellen oligomeren oder polymeren Verbindungen (2b) ein Organopolysiloxan-, oder ein Organopolysiloxan enthaltender Copolymerrest, wie Siliconpolyetherrest, ist.

7. Verfahren nach einem der Ansprüche 1, 2 oder 3, **dadurch gekennzeichnet, dass** als Verbindungen (2) β-Ketocarbonylfunktionelle Organosiliciumverbindungen (2c) eingesetzt werden, die mindestens einen Si-gebundenen Rest der allgemeinen Formel 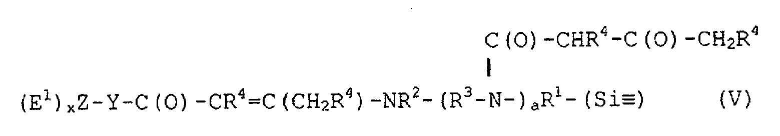 enthalten, wobei
-(Si≡) die Bindung zum Siliciumatom bedeutet,
R¹ ein zweiwertiger organischer Rest mit 1 bis 6 Kohlenstoffatomen, der gegebenenfalls von einander separate Stickstoffatome enthalten kann, vorzugsweise ein zweiwertiger Kohlenwasserstoffrest mit 1 bis 6 C- Atomen bedeutet, der gegebenenfalls ein oder mehrere von einander separate Stickstoffatome enthalten kann,
R³ einen zweiwertigen organischen Rest mit 1 bis 6 Kohlenstoffatomen, vorzugsweise mit 2 bis 6 Kohlenstoffatomen, bevorzugt einen zweiwertigen Kohlenwasserstoffrest mit 2 bis 6 Kohlenstoffatomen bedeutet,
Y, R² und R⁴ die im Anspruch 4 dafür angegebene Bedeutung haben,
Z ein zwei- bis sechswertiger organischer Rest mit einer monomeren, oligomeren oder polymeren Struktur ist, der einen gewichtsmäßigen Heteroatomgehalt von mindestens 10 % hat, der über C-Atome gebunden ist,
E¹ eine monofunktionelle Endgruppe oder ein Si-C-gebundener Rest der allgemeinen Formel 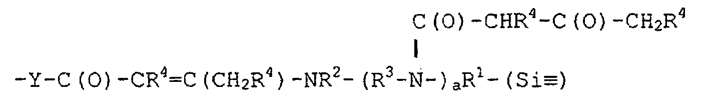 ist,
a eine ganze Zahl von 1 bis 5, vorzugsweise 1 oder 2 ist und
x 0 oder eine ganze Zahl von 1 bis 5 ist, vorzugsweise 0 oder 1 ist, bevorzugt 1 ist.

8. Verfahren nach Anspruch 7, **dadurch gekennzeichnet, dass** Z ein Polyether- oder Polyester-rest ist.

9. Verfahren nach einem der Ansprüche 1 bis 8, **dadurch gekennzeichnet, dass** die Behandlung der cellulosehaltigen Fasern oder Flächengebilde enthaltend cellulosehaltige Fasern
zuerst mit
(1) mindestens zwei primäre Amingruppen aufweisenden Verbindungen
erfolgt und dann anschließend die Behandlung mit
(2) mindestens eine β-Ketocarbonylgruppe aufweisenden Verbindungen
erfolgt.

10. Verfahren nach einem der Ansprüche 1 bis 8, **dadurch gekennzeichnet, dass** die Behandlung der cellulosehaltigen Fasern oder Flächengebilde enthaltend cellulosehaltige Fasern
mit einer Mischung aus
(1) mindestens zwei primäre Amingruppen aufweisenden Verbindungen und
(2) mindestens eine β-Ketocarbonylgruppe aufweisenden Verbindungen,
erfolgt, wobei vor der Behandlung die Mischung aus (1) und (2) hergestellt wird.

11. Verfahren nach einem der Ansprüche 1 bis 10, **dadurch gekennzeichnet, dass** die Verbindungen (1) in Mengen von 1,1 bis 500 Mol Amingruppe je Mol β-Ketocarbonylgruppe in Verbindungen (2), eingesetzt werden.

12. Verfahren nach einem der Ansprüche 1 bis 11, **dadurch gekennzeichnet, dass** die Verbindungen (1) und (2) in Form von wässrigen Lösungen oder wässrigen Dispersionen eingesetzt werden.

13. Verfahren nach einem der Ansprüche 1 bis 12, **dadurch gekennzeichnet, dass** als cellulosehaltige Fasern wässrige cellulosehaltige Faserbreie eingesetzt werden.

14. Verfahren nach Anspruch 13, **dadurch gekennzeichnet, dass** zu den wässrigen cellulosehaltigen Faserbreien die Verbindungen (1) und (2) zugegeben werden, wobei die Verbindungen (1) und (2)
(i) entweder einzeln in aufeinander folgenden Schritten oder
(ii) zusammen als Vormischung aus (1) und (2)
zugegeben werden.

15. Verfahren nach einem der Ansprüche 1 bis 12, **dadurch gekennzeichnet, dass** als Flächengebilde enthaltend cellulosehaltige Fasern Papierprodukte, wie Papiertücher, eingesetzt werden.

16. Verfahren nach Anspruch 15, **dadurch gekennzeichnet, dass** die Verbindungen (1) und (2) auf die Papierprodukte gesprüht werden, wobei die Verbindungen (1) und (2)
(i) entweder einzeln in aufeinander folgenden Sprühschritten oder
(ii) zusammen als Vormischung aus (1) und (2)
aufgesprüht werden.

17. Papierprodukte enthaltend
Flächengebilde enthaltend cellulosehaltige Fasern, wobei die Flächengebilde weiterhin eine Kombination von
(1) mindestens zwei primäre Amingruppen aufweisenden Verbindungen und
(2) mindestens eine β-Ketocarbonylgruppe aufweisenden Verbindungen,
enthalten.

18. Papierprodukte nach Anspruch 17, **dadurch gekennzeichnet, dass** die Verbindungen (1) und (2) zu wässrigen cellulosehaltigen Faserbreien, die zur Herstellung der Flächengebilde eingesetzt wurden, zugegeben wurden.

## Claims

1. Method for treating cellulose-containing fibers or planar structures containing cellulose-containing fibers with a combination of
(1) compounds having at least two primary amino groups and
(2) compounds having at least one β-ketocarbonyl group.

2. Method according to Claim 1, **characterized in that** the compounds (2) contain
β-ketocarbonyl groups of the general formula
-Y'-C(O)-CHR⁴-C(O)-CH₂R⁴
or their tautomeric enol form of the formula
-Y'-C(O)-CR⁴=C(CH₂R⁴)-OH
in which
Y' is -O-, -NR²- or 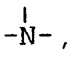 preferably -O-,
R² is a hydrogen atom or a monovalent hydrocarbon radical having 1 to 30 C atoms, preferably a hydrogen atom, and
R⁴ is a hydrogen atom or a monovalent hydrocarbon radical having 1 to 18 C atoms, preferably a hydrogen atom.

3. Method according to Claim 1 or 2, **characterized in that** polyamines are used as compounds (1).

4. Method according to Claim 1, 2 or 3, **characterized in that** β-ketocarbonyl-functional monomeric compounds (2a) of the general formula
L(-Y-C(O)-CHR⁴-C(O)-CH₂R⁴)ₑ (I)
or their tautomeric enol forms
in which
e is an integer from 1 to 20, preferably 2 to 20, preferably 2 to 8,
L is a monomeric organic radical having the valency or functionality corresponding to the index e in formula (I), i.e. a monofunctional to 20-functional monomeric organic radical, and
Y is -O- or -NR²-, preferably -O-,
R² is a hydrogen atom or a monovalent hydrocarbon radical having 1 to 30 C atoms, preferably a hydrogen atom, and
R⁴ is a hydrogen atom or a monovalent hydrocarbon radical having 1 to 18 C atoms, preferably a hydrogen atom, are used as compounds (2).

5. Method according to any of Claims 1 to 3, **characterized in that** β-ketocarbonyl-functional oligomeric or polymeric compounds (2b) of the general formula
K(-Y-C(O)-CHR⁴-C(O)-CH₂R⁴)_{f} (III)
or their tautomeric enol forms, in which
f is an integer from 1 to 10 000, preferably 2 to 2000, preferably 2 to 200,
K is an oligomeric or polymeric, organic or organosilicon radical having the valency or functionality corresponding to the index f in formula (III), i.e. a monofunctional to 10 000- functional oligomeric or polymeric, organic or organosilicon radical, and
Y and R⁴ have the meaning stated therefor in Claim 4,
are used as compounds (2).

6. Method according to Claim 5, **characterized in that** the radical K in the β-ketocarbonyl-functional oligomeric or polymeric compounds (2b) is an organopolysiloxane radical or an organopolysiloxane-containing copolymer radical, such as silicone polyether radical.

7. Method according to any of Claims 1, 2 and 3, **characterized in that** β-ketocarbonyl-functional organosilicon compounds (2c) which contain at least one Si-bonded radical of the general formula 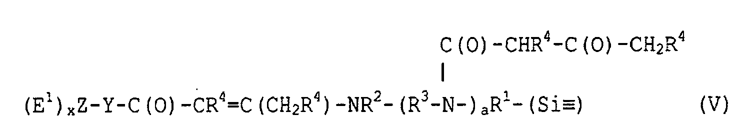 in which
-(Si≡) is the bond to the silicon atom,
R¹ is a divalent organic radical having 1 to 6 carbon atoms which may optionally contain nitrogen atoms separate from one another, preferably a divalent hydrocarbon radical having 1 to 6 C atoms which may optionally contain one or more nitrogen atoms separate from one another,
R³ is a divalent organic radical having 1 to 6 carbon atoms, preferably having 2 to 6 carbon atoms, preferably a divalent hydrocarbon radical having 2 to 6 carbon atoms,
Y, R² and R⁴ have the meaning stated therefor in Claim 4,
Z is a divalent to hexavalent organic radical having a monomeric, oligomeric or polymeric structure, which has a weight-based heteroatom content of at least 10%, which is bonded via C atoms,
E¹ is a monofunctional terminal group or an Si-C- bonded radical of the general formula 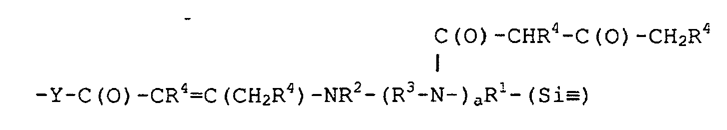
a is an integer from 1 to 5, preferably 1 or 2, and
x is 0 or an integer from 1 to 5, preferably 0 or 1, preferably 1,
are used as compounds (2).

8. Method according to Claim 7, **characterized in that** Z is a polyether or polyester radical.

9. Method according to any of Claims 1 to 8, **characterized in that** the treatment of the cellulose-containing fibers or planar structures containing cellulose-containing fibers is effected first with
(1) compounds having at least two primary amino groups
and subsequently the treatment is effected with
(2) compounds having at least one β-ketocarbonyl group.

10. Method according to any of Claims 1 to 8, **characterized in that** the treatment of the cellulose-containing fibers or planar structures containing cellulose-containing fibers is effected with a mixture of
(1) compounds having at least two primary amino groups and
(2) compounds having at least one β-ketocarbonyl group,
the mixture of (1) and (2) being prepared before the treatment.

11. Method according to any of Claims 1 to 10, **characterized in that** the compounds (1) are used in amounts of 1.1 to 500 mol of amino group per mole of β-ketocarbonyl group in compounds (2).

12. Method according to any of Claims 1 to 11, **characterized in that** the compounds (1) and (2) are used in the form of aqueous solutions or aqueous dispersions.

13. Method according to any of Claims 1 to 12, **characterized in that** aqueous cellulose-containing fiber slurries are used as cellulose-containing fibers.

14. Method according to Claim 13, **characterized in that** the compounds (1) and (2) are added to the aqueous cellulose-containing fiber slurries, the compounds (1) and (2) being added
(i) either individually in successive steps or
(ii) together as a premix of (1) and (2).

15. Method according to any of Claims 1 to 12, **characterized in that** paper products, such as paper towels, are used as planar structures containing cellulose-containing fibers.

16. Method according to Claim 15, **characterized in that** the compounds (1) and (2) are sprayed onto the paper products, the compounds (1) and (2) being sprayed on
(i) either individually in successive spraying steps or
(ii) together as a premix of (1) and (2).

17. Paper products containing
planar structures containing cellulose-containing fibers, the planar structures furthermore containing a combination of
(1) compounds having at least two primary amino groups and
(2) compounds having at least one β-ketocarbonyl group.

18. Paper products according to Claim 17, **characterized in that** the compounds (1) and (2) were added to aqueous cellulose-containing fiber slurries which were used for producing the planar structures.

## Revendications

1. Procédé pour le traitement de fibres contenant de la cellulose ou d'objets plats contenant des fibres contenant de la cellulose, par une association
(1) de composés comportant au moins deux groupes amino primaires et
(2) de composés comportant au moins un groupe β-cétocarbonyle.

2. Procédé selon la revendication 1, **caractérisé en ce que** les composés (2) contiennent des groupes β-cétocarbonyle de formule générale
-Y'-C(O)-CHR⁴-C(O)-CH₂R⁴
ou leur forme énol tautomère de formule
-Y'-C(O)-CR⁴=C(CH₂R⁴)-OH
où
Y' est -O-, -NR²- ou 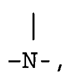 de préférence -O-,
R² représente un atome d'hydrogène ou un radical hydrocarboné monovalent ayant de 1 à 30 atomes de carbone, de préférence un atome d'hydrogène, et
R⁴ représente un atome d'hydrogène ou un radical hydrocarboné monovalent ayant de 1 à 18 atomes de carbone, de préférence un atome d'hydrogène.

3. Procédé selon la revendication 1 ou 2, **caractérisé en ce qu'**on utilise comme composés (1) des polyamines.

4. Procédé selon la revendication 1, 2 ou 3, **caractérisé en ce qu'**on utilise comme composés (2) des composés monomères (2a) à fonction β-cétocarbonyle, de formule générale
L(-Y-C(O)-CHR⁴-C(O)-CHR⁴)ₑ (I),
ou leurs formes énol tautomères,
où
e est un nombre entier allant de 1 à 20, de préférence de 2 à 20, encore mieux de 2 à 8,
L représente un radical organique monomère ayant la fonctionnalité ou la valence correspondant à l'indice e dans la formule (I), c'est-à-dire un radical organique monomère monofonctionnel à 20- fonctionnel, et
Y est -O- ou -NR²-, de préférence -O-,
R² représente un atome d'hydrogène ou un radical hydrocarboné monovalent ayant de 1 à 30 atomes de carbone, de préférence un atome d'hydrogène, et
R⁴ représente un atome d'hydrogène ou un radical hydrocarboné monovalent ayant de 1 à 18 atomes de carbone, de préférence un atome d'hydrogène.

5. Procédé selon l'une quelconque des revendications 1 à 3, **caractérisé en ce qu'**on utilise comme composés (2) des composés oligomères ou polymères (2b) à fonction β-cétocarbonyle, de formule générale
K-(-Y-C(O)-CHR⁴-C(O)-CH₂R⁴)_{f} (III),
ou leurs formes énol tautomères,
où
f est un nombre entier allant de 1 à 10 000, de préférence de 2 à 2 000, encore mieux de 2 à 200,
K représente un radical organique ou organosilicié oligomère ou polymère ayant la fonctionnalité ou la valence correspondant à l'indice f dans la formule (III), c'est-à-dire un radical organique ou organosilicié oligomère ou polymère monofonctionnel à 10 000-fonctionnel, et
Y et R⁴ ont les significations indiquées pour ces radicaux dans la revendication 4.

6. Procédé selon la revendication 5, **caractérisé en ce que** le radical K dans les composés oligomères ou polymères (2b) à fonction β-cétocarbonyle est un radical organopolysiloxane ou un radical copolymère contenant un organopolysiloxane, tel qu'un radical silicone-polyéther.

7. Procédé selon l'une quelconque des revendications 1, 2 et 3, **caractérisé en ce qu'**on utilise en tant que composés (2) des composés organosiliciés (2c) à fonction β-cétocarbonyle, qui contiennent au moins un radical lié à Si, de formule générale 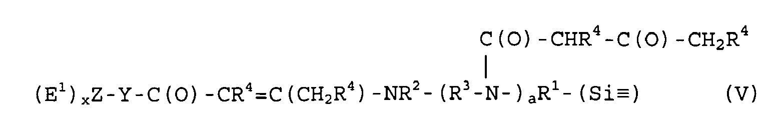 dans laquelle
-(Si≡) représente la liaison à l'atome de silicium,
R¹ représente un radical organique divalent ayant de 1 à 6 atomes de carbone, qui peut éventuellement contenir des atomes d'azote séparés les uns des autres, de préférence un radical hydrocarboné divalent ayant de 1 à 6 atomes de carbone, qui peut éventuellement contenir un ou plusieurs atomes d'azote séparés les uns des autres,
R³ représente un radical organique divalent ayant de 1 à 6 atomes de carbone, de préférence ayant de 2 à 6 atomes de carbone, encore mieux un radical hydrocarboné divalent ayant de 2 à 6 atomes de carbone,
Y, R² et R⁴ ont les significations indiquées pour ces radicaux dans la revendication 4,
Z représente un radical organique divalent à hexavalent ayant une structure monomère, oligomère ou polymère, qui a une teneur pondérale en hétéroatomes d'au moins 10 % et qui est lié par des atomes de carbone,
E¹ représente un groupe terminal monofonctionnel ou un radical lié par une liaison Si-C, de formule générale 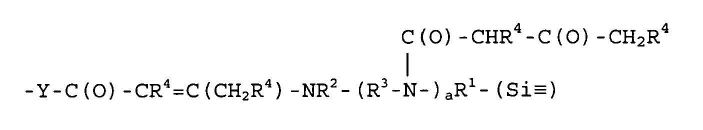
a est un nombre entier allant de 1 à 5, de préférence 1 ou 2 et
x est 0 ou un nombre entier de 1 à 5, de préférence 0 ou 1, encore mieux 1.

8. Procédé selon la revendication 7, **caractérisé en ce que** Z est un radical polyéther ou polyester.

9. Procédé selon l'une quelconque des revendications 1 à 8, **caractérisé en ce qu'**on effectue le traitement des fibres contenant de la cellulose ou des objets plats contenant des fibres contenant de la cellulose d'abord par
(1) des composés comportant au moins deux groupes amino primaires
et on effectue ensuite le traitement par
(2) des composés comportant au moins un groupe β-cétocarbonyle.

10. Procédé selon l'une quelconque des revendications 1 à 8, **caractérisé en ce qu'**on effectue le traitement des fibres contenant de la cellulose ou des objets plats contenant des fibres contenant de la cellulose
par un mélange
(1) de composés comportant au moins deux groupes amino primaires et
(2) de composés comportant au moins un groupe β-cétocarbonyle,
le mélange de (1) et (2) étant préparé avant le traitement.

11. Procédé selon l'une quelconque des revendications 1 à 10, **caractérisé en ce qu'**on utilise les composés (1) en quantités de 1,1 à 500 moles de groupe amino par mole de groupe β-cétocarbonyle dans les composés (2).

12. Procédé selon l'une quelconque des revendications 1 à 11, **caractérisé en ce que** les composés (1) et (2) sont utilisés sous forme de solutions aqueuses ou de dispersions aqueuses.

13. Procédé selon l'une quelconque des revendications 1 à 12, **caractérisé en ce qu'**on utilise en tant que fibres contenant de la cellulose des pâtes aqueuses de fibres contenant de la cellulose.

14. Procédé selon la revendication 13, **caractérisé en ce qu'**on ajoute les composés (1) et (2) aux pâtes aqueuses de fibres contenant de la cellulose, les composés (1) et (2) étant ajoutés
(i) soit individuellement en des étapes successives, soit
(ii) ensemble sous forme de prémélange de (1) et (2).

15. Procédé selon l'une quelconque des revendications 1 à 12, **caractérisé en ce qu'**on utilise en tant qu'objets plats contenant des fibres contenant de la cellulose des produits à base de papier, tels que des essuie-mains en papier.

16. Procédé selon la revendication 15, **caractérisé en ce qu'**on pulvérise les composés (1) et (2) sur les produits à base de papier, les composés (1) et (2) étant pulvérisés
(i) soit individuellement en des étapes successives de pulvérisation, soit
(ii) ensemble sous forme de prémélange de (1) et (2).

17. Produits à base de papier, contenant des objets plats contenant des fibres contenant de la cellulose, les objets plats contenant en outre une association
(1) de composés comportant au moins deux groupes amino primaires et
(2) de composés comportant au moins un groupe β-cétocarbonyle.

18. Produits à base de papier selon la revendication 17, **caractérisés en ce que** les composés (1) et (2) sont ajoutés à des pâtes aqueuses de fibres contenant de la cellulose, qui ont été utilisées pour la production des objets plats.
